# EUROPEAN PATENT APPLICATION

(11) **EP 0 964 012 A1**
(43) Date of publication of application: **15.12.1999**
(21) Application number: 99111153.5
(22) Date of filing: 08.06.1999
(51) Int. Cl.: C08G 18/10, C08G 18/67, C09J 175/16, C08G 18/71, C08G 18/20

(54) **UV / Moisture cure adhesive**

(30) Priority: 09.06.1998 US 94277
(71) Applicant: National Starch and Chemical Investment Holding Corporation, Wilmington, Delaware 19803-7663 (US)
(72) Inventor: Wallach, Robert S., Franklin Park, New Jersey 08823 (US)
(74) Representative: Held, Stephan, Dr.rer.nat., Dipl.-Chem.

(57) **Abstract**

An adhesive composition, curable by UV irradiation and moisture, comprises (1) a polyisocyanate prepolymer containing acrylic unsaturation and free isocyanate functionality, (2) a sulfonyl isocyanate, and (3) a catalyst containing both ether and morpholine groups.

## Description

This invention relates to adhesives that cure by both UV irradiation and reaction with water.

UV curable adhesives require that the product be exposed to the light source. However, in many applications, such as sealing, encapsulation, coating and bonding, a portion of the adhesive will be present in an area, such as a crack or gap, that is not exposed to light. This unexposed adhesive will not cure, resulting in the production of volatiles or a reduction in performance. The prior art solution to this problem has been to add a component to the adhesive composition that is thermally curable so that the portion of the adhesive not exposed to UV radiation will cure by the application of heat. This approach, however, requires the use of expensive ovens and significant expenditures of energy to effect the cure. A second solution has been to add a moisture curable component to the adhesive. This second approach also is undesirable because the composition in that case frequently will cure prematurely during storage, leading to reduced activity over time.

Thus, there is a need for an adhesive composition that is both UV and dark curable, and that is stable and capable of providing consistent performance even after extended storage.

This invention is an adhesive composition, curable by UV irradiation and moisture, that provides excellent stability and adhesive performance even after extended aging. The adhesive composition comprises (1) a polyisocyanate prepolymer containing acrylic unsaturation and free isocyanate functionality, (2) a sulfonyl isocyanate, and (3) a catalyst containing both ether and morpholine groups.

The polyisocyanate prepolymer is prepared by reacting a polyisocyanate with a monomer containing both acrylic functionality and hydroxyl or amine functionality. The molar ratio of the polyisocyanate to the acrylate monomer is 1:1. The equivalents of isocyanate functionality to the hydroxyl or amine functionality is 2:1 to 5:1.

The preferred polyisocyanates are selected from those having a number average molecular weight in the range of about 400-2000. Exemplary polyisocyanates include those sold by Bayer under the tradenames Desmodur W, Mondur CD, Mondur PF, Mondur ML, and Desmodur N 3300; those sold by ICI under the tradenames Rubinate LF 1680, Rubinate 1720, and Rubinate 2271; and isophorone diisocyanate, 4,4'-diphenylmethane diisocyanate, 2,4-diphenylmethane diisocyanate, toluene diisocyanate, 1,6 hexamethylene diisocyanate, and oligomers of those isocyanates having been formed from reactions with polyols.

The preferred acrylate monomers are those having hydroxyl functionality, particularly 2-hydroxyethyl acrylate. Other suitable hydroxyl-containing acrylic monomers include 2-hydroxypropyl acrylate, 2-hydroxypropyl methacrylate, and 2-hydroxyethyl methacrylate.

The prepolymer containing excess isocyanate functionality may be blended with other acrylate monomers that do not contain any functionalities reactive with isocyanate. The addition of these monomers is optional and the type and amount are chosen for particular end properties. Examples of the kinds of monomers that may be blended with the isocyanate prepolymer are isobornyl acrylate, 2-phenoxyethyl acrylate, ethylhexyl acrylate, isodecyl acrylate, tetrahydrofurfuryl acrylate, isobornyl methacrylate, bisphenol A diacrylate, bisphenol A dimethacrylate, trimethylolpropane triacrylate, trimethylolpropane trimethacrylate, ethoxylated bisphenol A diacrylate, and ethoxylated bisphenol A dimethacrylate.

The sulfonyl isocyanate is included in the composition to impart storage stability. Suitable sulfonyl isocyanates include para-toluene sulfonyl isocyanate (PTSI), and benzyl sulfonyl isocyanate. These compounds are more reactive with water than are the free NCO groups on the polyfunctional isocyanate. Consequently, during storage, ambient moisture appears to react solely with the sulfonyl isocyanate and not with the polyisocyanate prepolymer.

Unexpectedly, however, this adhesive composition will still provide sufficient reactivity so that any portion of the adhesive that is not exposed to UV irradiation will provide a moisture cure. In tests, the performance of the adhesive is unaffected and consistent performance is seen even after aging at 50°C for 10 days. Moreover, no inert gas cover is necessary to provide stability. Since one molecule provides isocyanate and acrylate functionality, cure is effected with either moisture or light. No material is left unreacted to plasticize and reduce the properties of the cured product.

The preferred ether and morpholine containing catalysts are 2,2'-dimorpholinoethyl ether, commercially available as Texacat DMDEE from Texaco, or di(2,6-dimethylmorpholinoethyl)ether, commercially available as U-CAT 2041 from Sanapuro Company, represented by the following formulae respectively: 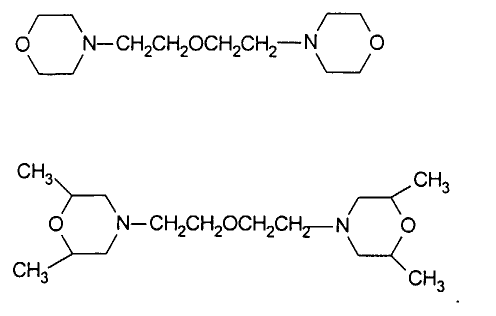 The catalysts are used in an effective amount to catalyze the reaction; typically this amount will vary within the range of 0.005 to 0.25% by weight of the adhesive composition.

### EXAMPLE

A series of adhesive compositions were prepared by blending a polyisocyanate prepolymer with various components. The components and the parts by weight used are shown in the table below.

The polyisocyanate prepolymer was prepared as follows. The polyisocyanate Desmodur N 3300 from Bayer (5 equivalent NCO, 975 g ) was charged to a reaction kettle and heated to 52°C with agitation at 145 rpm. The reactor was purged with dry air at 5.33 m³/hour, and then hydroxyethyl acrylate (1 equivalent OH, 116 g) was added to the reaction vessel uniformly over one hour. The exotherm of the contents was controlled to 66°C. After addition was complete, the reaction mixture was heated to 88°C with stirring for one hour.

This polyisocyanate prepolymer was then mixed with the components as shown in the table. The compositions were aged for 10 days at 50°C. Ten days at 50°C is deemed to be comparable to six months of aging at a recommended storage temperature of 20°C.

After aging, the cured properties of the compositions were observed for gellation, an indication of premature curing, and then measured for adhesive performance by testing the samples' maximum hardness, using the test method ASTM D 2240-91. (This test measures the hardness of a material based on the penetration of an indentor when forced into the material under specific conditions. Type A Shore Durometer was used for the tests on these samples). The samples were irradiated with UV light from a 300 Watt/2.54cm Fusion Systems type "D" bulb for 4 seconds and then subjected to 50% relative humidity at 25°C until maximum hardness was reached. The results are reported in the table below.

| COMPONENTS | Composition in parts by weight | | | | | | | |
|---|---|---|---|---|---|---|---|---|
| | A | B | C | D | E | F | G | H |
| Polyisocyanate prepolymer | 75 | 75 | 75 | 75 | 75 | 50 | 60 | 85 |
| Isobornyl acrylate | | 20 | | | | | | |
| Bis-phenol A diacrylate | 20 | | 20 | 20 | 20 | 45 | 35 | 10 |
| Photoinitiator Irgacure 1700 | 2 | 2 | 2 | 2 | 2 | 2 | 2 | 2 |
| PTSI | 1 | 1 | - | 1 | - | 1 | 1 | 1 |
| DMDEE | 0.1 | 0.1 | - | - | 0.1 | 0.1 | 0.1 | 0.1 |
| Total | 98.1 | 98.1 | 97 | 98 | 97.1 | 98.1 | 98.1 | 98.1 |
| | | | | | | | | |

| PERFORMANCE | | | | | | | | |
|---|---|---|---|---|---|---|---|---|
| Initial cured properties ASTM Shore Hardness | 85A | 60A | 25A | 30A | 80A | 75A | 80A | 90A |
| Initial cure rate Hours to max. hardness | 48 | 48 | 168 | 144 | 48 | 36 | 48 | 72 |
| Stability | No | No | Gel | No | Gel | No | No | No |
| 10 days at 50°C | gel | gel | | gel | | gel | gel | gel |
| Cured properties post aging | 90A | 65A | - | 30A | - | 75A | 85A | 90A |
| Cure rate post aging Hours to max. hardness | 48 | 48 | - | 144 | - | 36 | 48 | 72 |

Samples A, B, F, G, and H are the inventive samples.

Sample C contained neither PTSI nor DMDEE: before aging testing, it reached a maximum hardness of only 25A after 168 hours of cure; it gelled during aging testing and gave no adhesive performance after the aging testing.

Sample D contained no DMDEE: although it did not gel during aging, is showed a maximum hardness of only 30A after 144 hours of cure, both before and after aging testing.

Sample E contained no PTSI: although it reached an acceptable hardness level in good time before aging testing, it gelled during aging testing, and showed no adhesive performance after aging.

In comparison, the inventive samples all demonstrated stability and good adhesive performance.

## Claims

1. An adhesive composition, curable by UV irradiation and moisture, comprising (1) a polyisocyanate prepolymer containing acrylic unsaturation and free isocyanate functionality, (2) a sulfonyl isocyanate, and (3) a catalyst containing both ether and morpholine groups.

2. The adhesive composition according to claim 1 in which the polyisocyanate prepolymer is prepared by reacting a polyisocyanate with an acrylate compound containing hydroxyl functionality.

3. The adhesive composition according to claim 1 in which the compound containing hydroxyl functionality is selected from the group consisting of 2-hydroxyethyl acrylate, 2-hydroxypropyl acrylate, 2-hydroxypropyl methacrylate, and 2-hydroxyethyl methacrylate.

4. The adhesive composition according to claim 1 in which the sulfonyl isocyanate is para-toluene sulfonyl isocyanate (PTSI) or benzyl sulfonyl isocyanate.

5. The adhesive composition according to claim 1 in which the catalyst containing both ether and morpholine groups is 2,2'-dimorpholinoethyl ether or di(2,6-dimethylmorpholinoethyl)ether.

6. The adhesive composition according to claim 1 in which the polyisocyanate prepolymer is blended with an acrylate monomer selected from the group consisting of isobornyl acrylate, 2-phenoxyethyl acrylate, ethylhexyl acrylate, isodecyl acrylate, tetrahydrofurfuryl acrylate, isobornyl methacrylate, bisphenol A diacrylate, bisphenol A dimethacrylate, trimethylolpropane triacrylate, trimethylolpropane trimethacrylate, ethoxylated bisphenol A diacrylate, and ethoxylated bisphenol A dimethacrylate.
